# EUROPÄISCHE PATENTSCHRIFT

(11) **EP 0 491 655 B1**
(45) Veröffentlichungstag und Bekanntmachung des Hinweises auf die Patenterteilung: **02.08.1995**
(21) Anmeldenummer: 91810874.7
(22) Anmeldetag: 13.11.1991
(51) Int. Cl.: G01G 19/02, G01G 3/13

(54) **Kraftsensorsystem, insbesondere zur dynamischen Achslast-, Geschwindigkeits-Achsabstands- und Gesamtgewichtsbestimmung von Fahrzeugen**
System of force sensors, especially for dynamic determination of axial charge, speed, axial distance and total weight of vehicles
Système de capteurs de force, notamment pour détermination dynamique de charge d'essieux, de vitesse, de distance d'essieux et de poids total d'un véhicule

(30) Priorität: 19.12.1990 CH 4024/90
(43) Veröffentlichungstag der Anmeldung: 24.06.1992
(73) Patentinhaber: K.K. HOLDING AG, CH-8408 Winterthur (CH)
(72) Erfinder: Sonderegger, Hans-Conrad, CH-8413 Neftenbach (CH); Calderara, Reto, CH-8413 Neftenbach (CH); Giorgetta, Mario, CH-8408 Winterthur (CH); Barberis, Dario, Dr., CH-8155 Niederhasli (CH); Caprez, Markus, Dr., CH-8049 Zürich (CH)

(56) Entgegenhaltungen:
- EP-A- 0 230 315
- DE-A- 2 311 928
- FR-A- 2 373 784
- FR-A- 2 406 815
- FR-A- 2 575 827

## Beschreibung

Die Erfindung betrifft eine Kraftsensoranordnung, insbesondere zur dynamischen Achslast-, Geschwindigkeits-, Achsabstands-und Gesamtgewichtsbestimmung von Fahrzeugen und ein Montageverfahren für die Anordnung. Weiterhin betrifft sie ein entsprechendes Montageverfahren. Eine Messanordnung, die in einer Plattform über eine Fläche verteilte Drucksensoren zur statischen Gewichtsmessung enthält, ist aus der EP-A-0230315 bekannt. Bekannt sind weiterhin andere statische Gewichtsmessungen von Fahrzeugen mittels Brückenwaagen, oder mit auf die Fahrbahnoberfläche aufsetzbaren und im allgemeinen leicht transportierbaren Wägeeinrichtungen. Als Beispiel dafür sei hier die CH-A-597 595 genannt, welche eine Wägeplattform beschreibt, bei der eine Wägeplatte unter Zwischenschaltung von hydraulischen Aufnehmern auf einer Grundplatte angebracht ist. Gemessen wird der Druck der durch die Belastung komprimierten Flüssigkeit. Auch mit Dehnungsmesselementen arbeitende Wägeplattformen sind bekannt. So besteht die in der US-A-3 949 822 beschriebene Wägeplattform aus einer durch die Belastung durchbiegbaren Grundplatte und einer Wägeplatte, wobei die Durchbiegung mittels Dehnungsmesselementen gemessen wird. Beide Wägeplattformen sind relativ dick und mit Auffahrrampen versehen. Es ist klar, dass sie sich nur für statische Wägungen von Achslasten oder solche bei sehr langsamer Ueberfahrt eignen.

Eine moderne Achslastbestimmung muss aber, angesichts des anschwellenden Fahrzeugverkehrs, dynamisch erfolgen können, d.h., ohne dass die Fahrzeuge ihre Geschwindigkeit drosseln müssen. Es ist bereits versucht worden, mittels sogenannten Piezokabeln, welche in den oberen Deckbelag einer Fahrbahn eingelegt wurden, Achslast und Fahrzeuggewicht zu bestimmen. Piezokabel enthalten als Signalelemente Piezofolien oder Piezomasse. Deren Messempfindlichkeit ist sehr temperaturabhängig. Die Messanordnung mit einem in den oberen Deckbelag eingebauten Piezokabel neigt zur Instabilität, wegen der kleinen kraftaufnehmenden Oberfläche und der Komprimierbarkeit eines Plastikkabels, was eine sich verändernde Messempfindlichkeit und weitere Unzulänglichkeiten der Messung wie z.B. Instabilität des Messnullpunktes verursacht. Zudem sind die Messresultate der Achslast und des Fahrzeuggewichtes zu ungenau, meist wegen des oft ungenügenden Isolationswiderstandes von Piezokabeln. Es ist die Aufgabe der vorliegenden Erfindung, eine Kraftsensoranordnung zu schaffen, welche die genannten Nachteile behebt und die dynamische Achslast-, Geschwindigkeits-, Achsabstand- und Gesamtgewichtsbestimmung von Fahrzeugen ermöglicht, wozu vorteilhafterweise zwei derartige Anordnungen in kurzem Abstand hintereinander angeordnet werden

Die Kraftsensoranordnung soll für jede Fahrbahnbreite geeignet und auf einfache Weise montierbar sein und sowohl für Asphaltwie auch Betonstrassen verwendbar sein. Eine Kraftsensoranordnung nach der Erfindung enthält daher eine Anzahl in Reihe angeordneter Piezoelemente, die mit einer elektronischen Signalverarbeitung verbunden sind, wobei die Piezoelemente in Längsrichtung eines Hohlprofils angeordnet und kraftschlüssig unter einer dauernden, hohen, elastischen Vorspannung gehalten sind, über die ganze Länge des Hohlprofils mindestens annähernd eine konstante Kraftmessempfindlichkeit gegeben ist, die Piezoelemente über eine eingelegte elektrisch leitende Signalleitung und weitere Signalleitungen an die Signalverarbeitung derart angeschlossen sind, dass ihre Einzel-, Gruppen- oder Parallelschaltung möglich ist, und wobei die Sensoranordnung aus einer Anschlusseinheit, mindestens einer Sensoreinheit und mindestens einer Abschlusseinheit aufgebaut ist.

Die Erfindung wird im folgenden näher beschrieben durch die Darstellung verschiedener Ausführungsformen anhand der Zeichnungen. Es stellen dar:
- Fig. 1: einen Querschnitt durch eine erfindungsgemässe Kraftsensoranordnung mit zylinderförmigem Hohlprofil (Rohrsensor)
- Fig. 2: das Montageverfahren zur Oeffnung eines Hohlprofils mit kreisförmigem Querschnitt durch Seiteneinspannung
- Fig. 3: die einbaufertige Kraftsensoranordnung
- Fig. 3A: eine Anschlusseinheit direkt an eine Sensoreinheit angeschlossen
- Fig. 3B: Separat angeschlossene Anschlusseinheit über einen Wellschlauch verbunden mit der Sensoreinheit
- Fig. 4: eine Anschlusseinheit
- Fig. 5: eine Sensoreinheit mit Steckverbindung
- Fig. 6: eine Abschlusseinheit mit Steckverbindung
- Fig. 7: Sensoreinheiten in Faltstellung zum Transport bereit
- Fig. 8: einen Querschnitt durch ein rohrförmiges Hohlprofil, wobei die Krafteinleitungsteile vom Rohr elektrisch isoliert sind
- Fig. 9: einen Querschnitt durch ein sechseckiges Hohlprofil
- Fig. 10: einen Längsschnitt durch ein Hohlprofil nach Fig. 8
- Fig. 11: einen Längsschnitt durch eine mit Vorverstärkern bestückte Sensoreinheit
- Fig. 12: ein bevorzugtes Montageverfahren, wobei eine Montageeinheit, bestehend aus einer, mindestens in Teilbereichen elektrisch leitenden Folie, beidseitig aufgebrachten Piezoscheiben, Krafteinleitteilen und Signalleitern in das geöffnete Hohlprofil eingeführt wird
- Fig. 13a,b,c: eine Messanordnung zum Erfassen von Fahrzeugen
- Fig. 14a,b,c: eine Messanordnung zur Bestimmung des Strassenbelastungsprofils
- Fig. 15: einen Querschnitt durch eine Ausfräsung im oberen Deckbelag einer Fahrbahn
- Fig. 16: einen Querschnitt durch eine Ausfräsung nach Fig. 15, mit einliegender Kraftsensoranordnung und schematisch dargestellter Krafteinleitung.

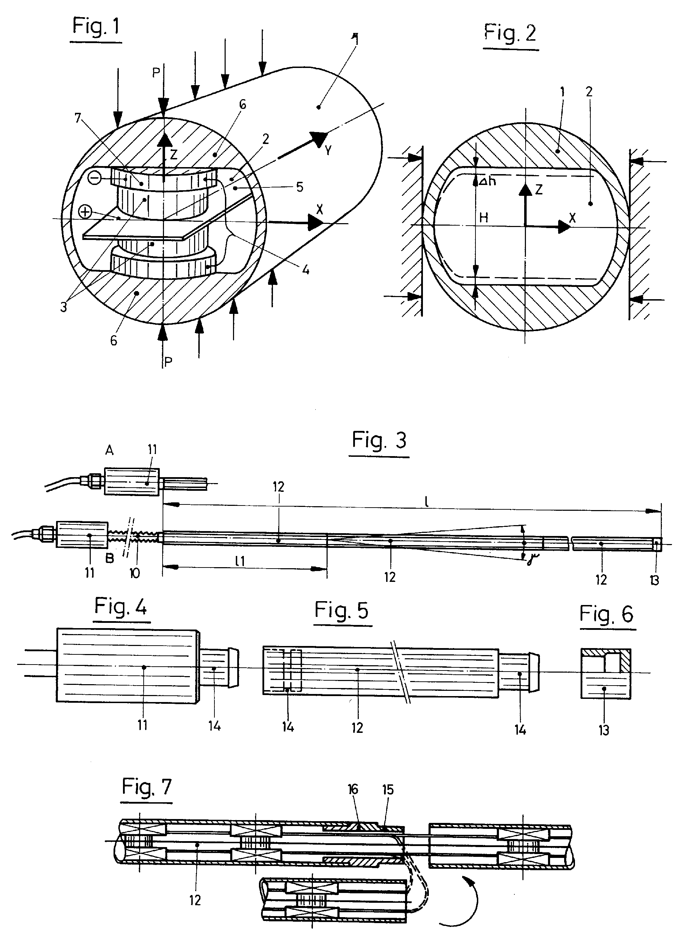

Fig. 1 zeigt eine perspektivische Ansicht mit Querschnitt durch eine erfindungsgemässe Kraftsensoranordnung mit zylinderförmigem Hohlprofil (Rohrsensor). Das Hohlprofil 1 enthält eine längsachsig liegende Aussparung 2, in der kraftschlüssig ein Piezoelement 4 liegt, wobei 3 die beiden Piezoscheiben und 7 die Krafteinleitteile sind. Dazwischen ist eine elektrisch leitende Folie 5 als Signalträger eingelegt. Das damit entstandene Piezoelement 4 ist so ausgelegt, dass es im wesentlichen für eine in z-Richtung wirkende Kraft empfindlich ist. Die Einleitung dieser Kraft P erfolgt über eine krafteinleitende Partie 6 und die Krafteinleitteile 7. Die Anordnung liegt, wie später ausgeführt wird, im allgemeinen im oberen Deckbelag einer Fahrbahn und die Kräfte P stammen vom Gewicht eines darüber fahrenden Fahrzeuges. Sie erzeugen beispielsweise in der elektrisch leitenden Folie 5 positive elektrische Ladungen, in den Krafteinleitteilen 7 negative Ladungen. Die Krafteinleitteile 7 können als das ganze Hohlprofil durchziehende isolierende Keramikleisten oder als Eizelteile ausgebildet sein. Bei Krafteinleitteilen 7 aus Keramik müssen metallisierte Partien entsprechend dem Stand der Technik vorgesehen sein, um die Minus-Ladungen ableiten zu können.

Es ist aber auch möglich, die Krafteinleitteile 7 aus Metall herzustellen und die Minus-Ladungen direkt über ein metallenes Hohlprofil abzuleiten.

Es ist jedoch sicherer, das Hohlprofil nur für die Verpackung und Krafteinleitung statt zusätzlich noch für elektrische Leitung zu benützen.

Das Piezoelement 4 ist mechanisch vorgespannt. Diese Vorspannung wird dadurch erreicht, dass das Hohlprofil 1 während der Montage seitlich in x-Richtung mit Pressbacken zusammengedrückt wird, wodurch die Aussparung 2 sich in z-Richtung um den Betragh Δh ausweitet (Fig. 2), worauf das Piezoelement 4 in die Aussparung 2 eingeführt wird. Nachdem der seitliche Druck aufgehoben worden ist, fällt auch die Ausweitung dahin, und das Piezoelement 4 erfährt bei geeigneter Dimensionierung des Hohlprofils 1 und der Aussparung 2 eine hohe elastische Vorspannung, wodurch über die ganze Länge des Hohlprofils 1 eine annähernd konstante Kraftmess-Empfindlichkeit gewährleistet wird (Fig. 2). Als Materialien für die Piezoscheiben 3 können sowohl kristalline Materialien wie auch Piezokeramiken oder Piezofolien verwendet werden. Das Hohlprofil 1 kann beispielsweise aus einem rostfreien Stahlrohr mit gezogenem Innenprofil oder aus einem extrudierten Rohr aus einer Al-Legierung bestehen. Ebenso könnte es aus einem geeigneten Kunststoff bestehen. Vorteilhaft zu Einbauzwecken hat sich ein Aussendurchmesser von ca. 20...30 mm ergeben.

Fig. 3 zeigt eine erfindungsgemässe Kraftsensoranordnung. Fig. 3A zeigt, wie eine Anschlusseinheit 11, die einen Verstärker enthalten kann, direkt am Kraftsensor der Länge ℓ angebracht ist. Fig. 3B zeigt diese Verbindung über ein Wellschlauchkabel 10. Der Kraftsensor der Länge ℓ (die bis 20 m sein kann) ist aus herstell- und montagetechnischen Gründen in Module der Länge ℓ₁ unterteilt. Diese Sensoreinheiten oder Module 12 sind vorteilhafterweise etwa 1...2 m lang und können zusammengesteckt, geschweisst oder geklebt werden. Um den Kraftsensor der Form der Fahrbahn anzupassen ist es vorteilhaft, die Kupplungselemente mit einer gewissen Elastizität auszurüsten, um zwischen den einzelnen Modulen Winkelabweichungen von der fluchtenden Linie zu ermöglichen; die dabei auftretenden Winkel γ betragen etwa 1 bis 3°.

Fig. 4 zeigt eine rohrförmig ausgebildete Anschlusseinheit 11 mit Kupplungsstück 14.

Fig. 5 zeigt eine als Modul ausgebildete Sensoreinheit 12 mit positiven und negativen Kupplungsstücken 14.

Fig. 6 zeigt eine Abschlusseinheit 13, die den Abschluss einer erfindungsgemässen Kraftsensoranordnung bildet. Die Abschlusseinheit kann jedoch auch ein integrierter Bestandteil einer Sensoreinheit sein. Der modulare Aufbau der Anordnung aus diesen zwei oder drei verschiedenen Teilen ist grundsätzlich allen Einbauanforderungen gewachsen.

Es ist klar, dass die Kupplungsstücke 14 sowohl mechanische wie auch elektrische Aufgaben lösen müssen.

In Fig. 7 ist angedeutet, wie eine Anzahl modularer Sensoreinheiten 12 faltenbalgähnlich zum Transport vorbereitet sein können, um dann bei der Verlegung ineinander geschoben zu werden. Dabei können auch einfache Verbindungsflansche 15 vorgesehen werden, die verschweisst oder verkittet werden.

Durch die Einspritzöffnung 16 kann eine Dichtmasse eingeführt werden.

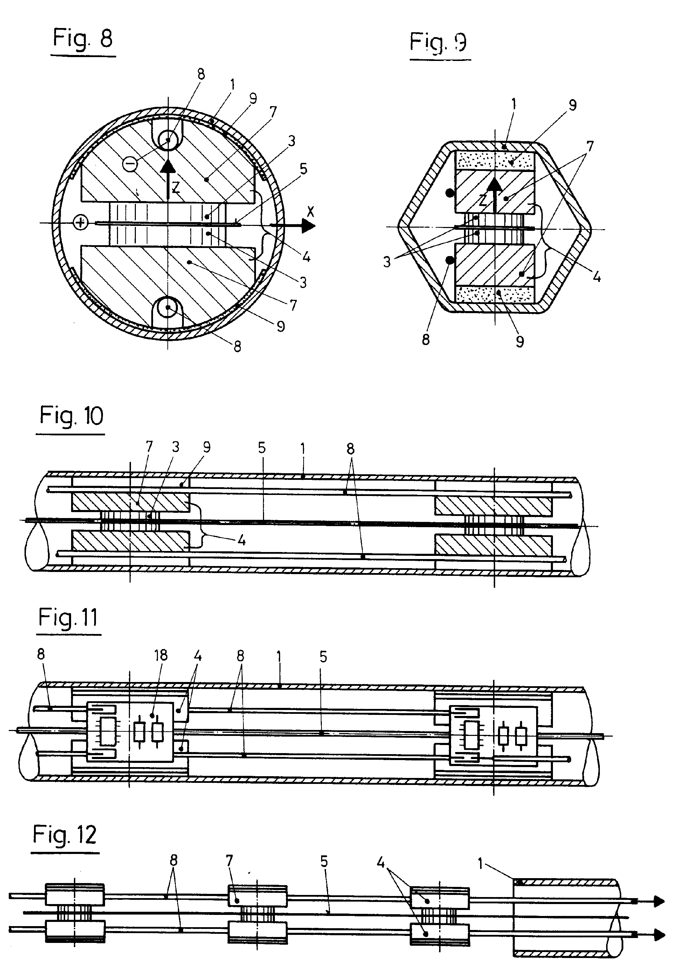

Fig. 8 zeigt einen Querschnitt durch eine ähnliche Ausführungsform der erfindungsgemässen Kraftsensorsanordnung wie Fig. 1. Der Hauptunterschied gegenüber der in Fig. 1 dargestellten Ausführungsform besteht im handelsüblichen Rohr, in dem die Krafteinleitung über separate, d.h. vom Hohlprofil 1 durch eine Isolationsschicht 9 getrennte Krafteinleitteile 7 erfolgt. Dadurch wird es möglich, beide Signalableitungen vom Hohlprofil 1 getrennt zu halten, wodurch das Messystem weniger störungsanfällig wird. Die Signalableitung erfolgt einerseits über die leitende Folie 5, anderseits über Signalleiter 8, welche in Nuten der Kraftleitteile 7 elektrisch leitend eingelegt sind. Auch mechanisch stellt die in Fig. 8 dargestellte Ausführungsform eine Variante von Fig. 1 dar, indem das Hohlprofil 1 aus einem Rohr besteht und zwecks Oeffnung ebenfalls durch seitliches Einspannen in Spezialschraubstock elastisch verspannt werden kann.

Fig. 9 zeigt ein erfindungsgemässes Hohlprofil in Form eines 6-kant Rohres, das ebenfalls durch Einspannen in x-Richtung mechanisch geöffnet werden kann. Es sind aber auch andere Hohlprofile denkbar.

Fig. 10 zeigt eine Anordnung nach Fig. 8 im Längsschnitt mit den in kurzen Abständen angeordneten Piezoelementen 4, den Signalleitern 8 und der elektrisch leitenden Folie 5.

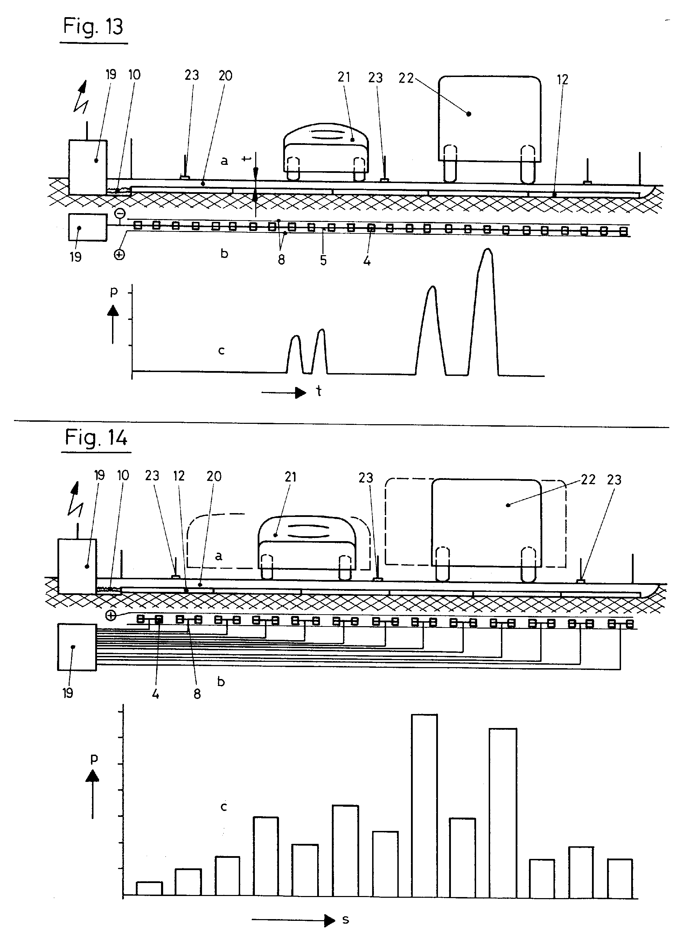

Bei den bisher dargestellten Ausführungsformen der Erfindung waren die Elektronikbauteile in der Anschlusseinheit 11 untergebracht. Ueblicherweise handelt es sich dabei um Ladungsverstärker oder Impedanzwandler. Integrierte Impedanzwandler haben zur Folge, dass die nachgeschalteten Kabel nicht mehr hochohmig isoliert sein müssen. Es kann nun erwünscht sein, wie später in der Beschreibung von Fig. 14 eingehender dargestellt, dass nur einzelne Piezoelemente 4 elektrisch durch Parallelschaltung verbunden sind und die Messsignale der derart entstehenden Gruppe von Piezoelementen getrennt nach aussen, d.h. zur Signalverarbeitungsanlage 19 geführt werden, wie in Fig. 14 gezeigt. Die Vorverstärker, von denen zu jeder Gruppe mindestens einer gehört, können dann z.B. innerhalb des Hohlprofils 1 liegen, wie in Fig. 11 dargestellt. Der Vorverstärker 18 ist in der in Fig. 11 dargestellten Ausführungsform seitlich an den elektrisch isolierenden Piezoelementen 4 angebracht, elektrisch verbunden einerseits mit der leitenden Folie 5, andererseits mit einem der voneinander elektrisch isolierten Signalleiter 8. Die beiden andern eingezeichneten Signalleiter 8 leiten die von weiteren Piezoelementen 4 oder Gruppen von Piezoelementen 4 stammenden Messsignale ab.

Es ist vorteilhaft, wenn die Signalleiter 8, Vorverstärker 18 sowie ev. weitere elektrische Bauteile innerhalb des Hohlprofils 1 liegen, weil sie dadurch gegen korrosive Einflüsse von aussen geschützt und elektrisch abgeschirmt sind.

Die separate Ableitung von Messsignalen hat auch den Vorteil, dass bei Unterbruch einer Signalleitung nicht der ganze Kraftsensor ausser Funktion gesetzt wird, sondern nur ein einzelnes Piezoelement 4 oder eine einzelne Gruppe von Piezoelementen 4. Zudem ermöglicht jeder Vorverstärker eine Abstimmung und damit eine Eichung der lokalen Messempfindlichkeit des oder der zugehörigen Piezoelemente, wodurch die konstante Messempfindlichkeit über die ganze Länge eines Hohlprofils 1 verbessert werden kann.

Fig. 12 stellt ein einfaches Montageverfahren für die erfindungsgemässe Anordnung dar. Die leitende Folie 5, die beidseitig paarweise aufgebrachten Piezoscheiben 3, die Krafteinleitteile 7 sowie die Signalleiter 8 bilden eine vormontierte Montageeinheit ähnlich einer Gliederkette von 1...2 m Länge.

Das Hohlprofil 1 (in diesem Falle ein Rohr) wird, analog zu dem in Fig. 2 dargestellten Verfahren, durch seitliche Pressung in der z-Richtung ausgedehnt, wodurch genügend freier Raum entsteht, um die genannte Montageeinheit in das Rohr einzuführen. Wird die seitliche Pressung aufgehoben, so zieht sich das Rohr wieder zusammen, wobei die Montageeinheit mit den Piezoelementen 4 unter eine hohe elastische Vorspannung gesetzt werden. Die bisher in den Figuren dargestellten Ausführungsformen der Erfindung zeigen kreisförmige Querschnitte des Hohlprofils. Es sind jedoch auch quadratische, rechteckige, sechseckige und andere Querschnitte möglich.

Fig. 13 zeigt eine Messanordnung, welche die erfindungsgemässe Anordnung zum Erfassen der den Rohrsensor überfahrenden Achsen verwendet.

Fig. 13a zeigt den Querschnitt durch eine zweispurige Fahrbahn. Die Sensoreinheiten 12 sind im Fahrbahnbelag 20 in bestimmter Tiefe 't' eingebettet und über Wellschlauchkabel 10 mit der Signalverarbeitungsanlage 19 verbunden.

Zur Erfassung der Fahrzeuggeschwindigkeit werden zwei solcher Kraftsensoranordnungen in einem bestimmten Abstand von beispielsweise 10 m hintereinander angeordnet.

Fig. 13b zeigt die Schaltungsart der im Hohlprofil angeordneten Piezoelemente 4. Dabei sind alle parallel geschaltet, so dass nur die elektrisch leitende Folie 5 und die Signalleiter 8 zum Vorverstärker der Signalverarbeitungsanlage 19 führen.

Fig. 13c zeigt - in einem schematischen Diagramm in Funktion der Zeit - die registrierten Kraftsignale, wenn ein Personenwagen 21 und kurz darauf ein Lastwagen 22 über die Messanordnung fahren.

Die gemessenen Impulse können im Rechner über Algorithmen direkt in Achslastwerte umgewertet werden. Bei zwei hintereinander angeordneten Anlagen können die Impulsanstiege direkt zur Geschwindigkeitsmessung verwendet werden.

Die Begrenzung des Systems ist ersichtlich, wenn zwei Fahrzeuge nebeneinander genau gleichzeitig die Messanordnung passieren. Für solche Anwendung ist es vorteilhaft, wenn die Piezoelemente 4 der Ueberholfahrbahn separat von der Hauptfahrbahn an die Signalverarbeitungsanlage 19 geleitet werden, was- beispielsweise durch Gruppen- oder Einzelschaltung der Piezoelemente - ohne weiteres möglich ist.

Fig. 14 zeigt einen Extremfall einer paarweisen Einzelauflösung der Mess-Signale über die gesamte Länge der erfindungsgemässen Kraftsensoranordnung.

Fig. 14a zeigt den Querschnitt durch eine zweispurige Fahrbahn wie Fig. 13a.

Fig. 14b zeigt die Schaltungsart der in der Anordnung angeordneten Piezoelemente 4 für die genannte Einzelauflösung. Dabei sind jeweils zwei Piezoelemente 4 via separaten Signalleiter 8 mit der Signalverarbeitungsanlage 19 verbunden, was eine separate Auswertung der einzelnen Abschnitte der Fahrbahnbreite erlaubt, wodurch eine Ortung der Fahrzeuge möglich ist. Noch extremer könnte jedes einzelne Piezoelement 4 mit der Signalverarbeitungsanlage verbunden sein. Damit sind gemäss Fig. 14c ganz neue Möglichkeiten offen, indem die Fahrbahnbreite in Dutzende von Einzelabschnitten aufgeteilt werden kann.

Falls erforderlich, können die Empfindlichkeiten der einzelnen Fahrbahnabschnitte in der Signalverarbeitungsanlage 19 mit Hilfe von bekannten Kalibrierverfahren - beispielsweise durch geeignet ausgerüstete Kalibriertrailer - einander angeglichen und justiert werden.

Fig. 14c zeigt ein Strassenbelastungsdiagramm, summiert z.B. nach einem Tag. Damit kann die Strassenbelagsforschung sehr wichtige Schlüsse über den Belastungszustand einzelner Strassenabschnitte aufstellen.

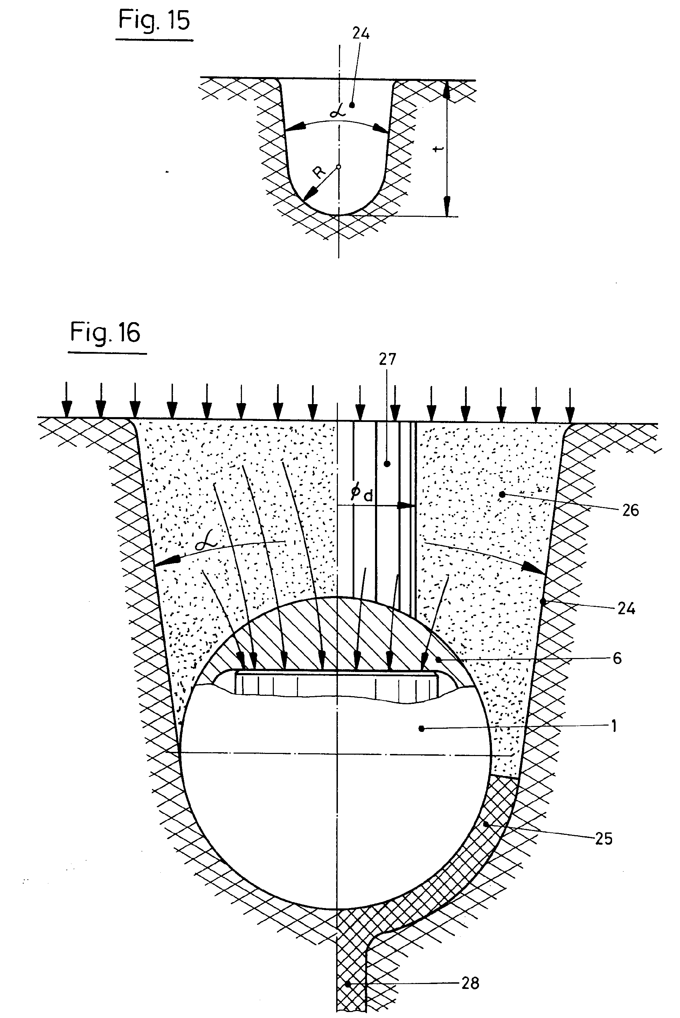

Fig. 15 zeigt die Dimensionen eines Fräsprofils wie es z.B. in einer Betonfahrbahn vorgesehen ist. Die optimierten Erfahrungswerte - Winkel α, Bodenradius R und Tiefe t - sind in ausgedehnten Versuchsreihen gewonnen worden.

Fig. 16 zeigt den Einbau im Querschnitt, Das Hohlprofil 1 kann gemäss der linken Figurhälfte direkt im Belag aufliegen oder in eine Schiene 25 eingelegt sein, gemäss rechter Figurhälfte. Die Schiene 25 ist ihrerseits mittels Stützdornen 28 fest in der Fahrbahn verankert. Von besonderer Bedeutung sind der Oeffnungswinkel und die Verbindung der Ausgussmasse 26 mit den Seitenwänden. Eventuell kann es vorteilhaft sein, die krafteinleitende Partie 6 mit Kraftübertragungsteilen 27, die in Zapfen-oder Leistenform auf dem Hohlprofil angebracht sind, vorzusehen. Diesbezüglich sind noch umfassende Versuche im Gang. Von grosser Bedeutung ist auch die Zusammensetzung der Ausgussmasse 26, je nachdem eine Asphalt- oder Betonfahrbahn ausgerüstet werden soll. Durch Zumischung von Kunststoffteilen kann die Ausgussmasse durch Versuchsserien optimiert werden. Ziel ist ein jahrelang zuverlässiger Einbau des erfindungsgemässen Kraftsensoranordnung.

Auf die elektronischen Auswertsysteme zur Erfassung der Achslasten der Fahrgeschwindigkeit der Achsabstände zur Erkennung der Fahrzeugtypen und Katalogisierung derselben, soll hier nicht eingegangen werden. In der Fachliteratur besteht über Trafficmanagement-Systeme bereits ein grosses Wissen. Diese Systeme sind bis heute mehrheitlich auf in der Fahrbahnoberfläche eingebauten Induktions-Schleifen aufgebaut und sind teilweise mit Piezokabelsensoren ergänzt worden.

Zuverlässige Trafficmanagement-Systeme sind aber bis heute nicht möglich geworden, weil keine zuverlässigen Achslastsensoren bekannt geworden sind.

Die erfindungsgemässe Kraftsensoranordnung deckt damit eine Marktlücke ab mit einem Solidstate-Sensorsystem, dessen Deformation unter Max.-Last im Bereich von wenigen Mikrometern liegt und dessen Empfindlichkeitsbereich vom Motorrad bis zum 40t Lastzug reicht.

Die piezoelektrische Messtechnik ist für die Registrierung hochdynamischer Vorgänge ideal. Sie weist auch die grösste Auflösungsmöglichkeit aller bekannten Messsysteme auf. Durch die einfache Signalabführung ist es ohne weiteres möglich, Dutzende von Einzelpiezoelementen separat der Signalverarbeitungsanlage 19 zuzuführen.

Von ausschlaggebender Bedeutung ist auch die Tatsache, dass die Piezoelemente die Messenergie selber erzeugen, die unter hoher Spannung sofort in der Signalverarbeitungsanlage 19 umgewandelt wird. Eine Aufheizung der Anordnung wie dies z.B. mit DMS bestückten Elementen der Fall wäre, trifft mit Piezoelementen nicht auf, sodass die erfindungsgemässe Messanordnung stets die Temperatur seiner Umgebung hat, womit Grenzschichtprobleme vermieden werden.

Die Verwendung von piezoelektrischen Vorverstärkern ist seit 15 Jahren bekannt. Sie können durch Solidstatetechnik auf wenig mm miniaturisiert werden.

Hybrid-Ladungsverstärker sind den Temperatur- und Erschütterungen des Strassenbetriebs voll gewachsen, sie ermöglichen konstante Empfindlichkeit der Piezoelemente 4 unabhängig von der Anzahl der angeschalteten Menge.

Die erfindungsgemässe Kraftsensoranordnung öffnet damit eine Reihe von Möglichkeiten, die sowohl in der Steuerung der zunehmend komplizierteren Verkehrsaufgaben, wie auch in der Zustandsüberwachung hochbeanspruchter Fahrbahnen auf Brücken, Tunneln etc. von Bedeutung werden können.

In grösserem Verbund angewendet, ermöglicht das erfindungsgemässe System die Transportflussrichtungen statistisch zu erfassen, was Gesamt-Uebersichten von internationalen Strassentransportwegen eröffnet.

Schlussendlich kann die Anordnung aber auch Fahrzeuge mit Ueberlast aus dem Verkehrsstrom ausscheiden.

Es ist anzunehmen, dass Fahrzeuggeschwindigkeiten von 5 km/h bis 200 km/h zuverlässige Gewichtsaussagen ermöglichen.

Eine weitere interessante Anwendung wird die erfindungsgemässe Anordnung auch zur Registrierung des Gütertransportes inner halb von Fabrikanlagen und Flugzeugpisten ergeben.

## Patentansprüche

1. Kraftsensoranordnung, insbesondere zur dynamischen Achslast-, Geschwindigkeits-, Achsabstands- und/oder Gesamtgewichtsbestimmung von Fahrzeugen, die eine Anzahl in Reihe angeordneter Piezoelemente (4) enthält, die mit einer elektronischen Signalverarbeitung (19) verbunden sind, wobei die Piezoelemente (4) in Längsrichtung eines Hohlprofils (1) angeordnet und kraftschlüssig unter einer dauernden, hohen, elastischen Vorspannung gehalten sind, über die ganze Länge des Hohlprofils (1) mindestens annähernd eine konstante Kraftmess-Empfindlichkeit gegeben ist, die Piezoelemente (4) über eine eingelegte elektrisch leitende Signalleitung (5) und weitere Signalleitungen (6,7,8) an die Signalverarbeitung (19) derart angeschlossen sind, dass ihre Einzel-, Gruppen- oder Parallelschaltung möglich ist, und wobei die Sensoranordnung aus einer Anschlusseinheit (11), mindestens einer Sensoreinheit (12) und mindestens einer Abschlusseinheit (13) aufgebaut ist.

2. Kraftsensoranordnung nach Anspruch 1, wobei die Abschlusseinheit (11) Verstärker, z.B. Ladungsverstärker oder Impedanzwandler, enthält.

3. Kraftsensoranordnung nach einem der Ansprüche 1 oder 2, wobei die Abschlusseinheit (13) in die Sensoreinheit (12), d.h. Teil der Sensoreinheit (12), integriert ist.

4. Kraftsensoranordnung nach einem der Ansprüche 1 bis 3, wobei das Hohlprofil (1) ein Rohr von kreisrundem Querschnitt ist, in dem Piezoscheiben (3) zwischen Krafteinleitsegmenten (7) eingebaut sind.

5. Kraftsensoranordnung nach einem der Ansprüche 1 bis 3, wobei das Hohlprofil (1) ein geometrisch anders geformtes Rohr, z.B. ein 6-kant Rohr (1) ist, in dem Piezoscheiben (3) zwischen Krafteinleitsegmenten (7) eingebaut sind, wobei die Hohlprofile (1) aus Metall oder Kunststoff bestehen können.

6. Kraftsensoranordnung nach einem der Ansprüche 1 bis 5, wobei das Hohlprofil (1) quer zu seiner Längsrichtung in Richtung der x-Achse durch mechanische Kompression verformbar ist, wodurch eine entsprechende elastische Oeffnung (Δh) senkrecht zur Kompression in z-Richtung erfolgt, womit der Einbau der Piezoelemente (4) möglich ist.

7. Kraftsensoranordnung nach einem der Ansprüche 1 bis 6, wobei Krafteinleitungselemente (7) vom Hohlprofil (1) elektrisch isoliert sind.

8. Kraftsensoranordnung nach einem der Ansprüche 1 bis 7, wobei das Hohlprofil (1) mehrere Sensoreinheiten (12) einheitlicher Basislänge (ℓ1) als Module, enthält, an die einerseits eine Anschlusseinheit (11), die direkt oder über Wellschlauchkabel mit den Sensoreinheiten (12) verbunden ist, und andererseits mindestens eine Abschlusseinheit (13) angeschlossen sind, wobei die einzelnen Einheiten (11,12,13) durch steckbare Verbindungen (14), Schweissflansche (15) oder Klebhülsen (15) miteinander verbunden sind, wobei weiterhin Metall- oder Kunststoff-Flansche oder -Hülsen (15) anwendbar sind, die gegebenenfalls nach der Montage mit Kunststoff aus Füllbar sind.

9. Kraftsensoranordnung nach Anspruch 8, wobei sie fertig verdrahtet in Sensoreinheitlänge (ℓ₁) zum Versand als Faltsystem verpackt ist, das an der Fahrbahnbaustelle geöffnet, zusammengefügt und verlegt wird, wobei die Kupplungsstücke (14), bzw. Flansche (15) eine gewisse Elastizität aufweisen,um die Sensoranordnung der Fahrbahn- krümmung anzupassen.

10. Kraftsensoranordnung nach einem der Ansprüche 1 bis 9, wobei die Piezoelemente (4) mit Vorverstärkern (18) verbunden sind.

11. Kraftsensoranordnung nach einem der Ansprüche 1 bis 10, wobei die in einem Hohlprofil (1) angeordneten Piezoelemente (4) elektrisch parallel geschaltet sind und mit einer einen Ladungsverstärker enthaltenden Anschlusseinheit (11) über gemeinsame Signalleitungen (5,8) verbunden sind.

12. Kraftsensoranordnung nach einem der Ansprüche 1 bis 10, wobei Piezoelemente (4) eines Hohlprofils (1) gruppenweise zusammengefasst sind, und die Messsignale der einzelnen Gruppen elektrisch getrennt abgeleitet und verarbeitet werden, wobei die einzelnen Gruppen mit oder ohne Vorverstärker (18) ausgerüstet sein können.

13. Kraftsensoranordnung nach einem der Ansprüche 1 bis 10, wobei die Mess-Signale jedes einzelnen Piezoelementes (4) separat abgeleitet und verarbeitet werden, wobei die einzelnen Piezoelemente (4) mit oder ohne Vorverstärker (18) ausgerüstet sein können.

14. Montageverfahren für eine Kraftsensoranordnung nach einem der Ansprüche 1 bis 13, indem aus einer Folie (5), den darauf montierten Piezoelementen (4) und den Signalleitungen (8) eine elastische Kette gebildet wird, welche in das Hohlprofil (1) eingezogen wird, das zuvor durch Kompression quer zu seiner Längsrichtung geöffnet worden ist, wonach die seitliche Kompression des Hohlprofils (1) gelöst wird, so dass auf der ganzen Hohlprofillänge alle Piezoelemente (4) elastisch verspannt sind, wodurch sämtliche Luftspalte aufgehoben sind und perfekte Linearität und Empfindlichkeit der Piezoelemente (4) gewährleistet ist.

## Claims

1. Force sensor arrangement, especially for determining dynamically the axle load, wheelbase and/or gross weight of vehicles, containing a number of piezo-elements (4) arranged in series and linked to an electronic signal processing facility (19), whereby the piezo-elements are disposed along the length of a hollow section (1) and held non-positively under a constant high elastic preload so that a force measuring sensitivity at least approximately constant over the entire length of the hollow section (1) is assured, the piezo-elements (4) being connected via an inlaid electrically conducting signal line (5) and further signal lines (6, 7, 8) to the signal processing facility (19) so that they may be switched singly, groupwise or paralleled, while the sensor arrangement is assembled from a connecting unit (11), at least one sensor unit (12) and at least one termination unit (13).

2. Force sensor arrangement according to Claim 1, whereby the termination unit (11) contains amplifiers such as charge amplifiers or impedance converters.

3. Force sensor arrangement according to Claim 1 or 2, whereby the termination unit (13) is integrated in the sensor unit (12), i.e. forms part of this.

4. Force sensor arrangement according to one of Claims 1 to 3, whereby the hollow section (1) is a tube of circular cross section in which the piezo-disks (3) are fitted between force-introducing segments (7).

5. Force sensor arrangement according to one of Claims 1 to 3, whereby the hollow section (1) is a tube of different geometrical form, such as a hexagonal section (1), in which piezo-disks (3) are fitted between force-introducing segments (7); the hollow section (1) may be of metal or plastic.

6. Force sensor arrangement according to one of Claims 1 to 5, whereby the hollow section (1) is deformable at right angles to its length in the direction of the x axis by mechanical compression, making possible a corresponding elastic opening (Δh) at right angles to the compression in the z direction and enabling the piezo-elements (4) to be fitted.

7. Force sensor arrangement according to one of Claims 1 to 6, whereby force introduction elements (7) are insulated electrically from the hollow section (1).

8. Force sensor arrangement according to one of Claims 1 to 7, whereby the hollow section (1) contains several sensor units (12) of identical base length (ℓ1) as modules, to which on the one hand a connecting unit (11) is joined to the sensor units (12) directly or through corrugated tubing cables, and on the other hand at least one termination unit (13) is connected, whereby the individual units (11, 12, 13) are joined together by pluggable connectors (14), welding flanges (15) or gluing sockets (15) and metal or plastic flanges or sockets (15) may be employed, possibly filled out with plastic after fitting.

9. Force sensor arrangement according to Claim 8, whereby it is packed completely wired in the sensor unit length (ℓ₁) as a folding system for transportation, which opens out and is joined up and laid at the roadway construction site, the coupling pieces (14) or flanges (15) having a certain elasticity for adapting the sensor arrangement to the roadway camber.

10. Force sensor arrangement according to one of Claims 1 to 9, whereby the piezo-elements (4) are connected with preamplifiers (18).

11. Force sensor arrangement according to one of Claims 1 to 10, whereby the piezo-elements (4) arranged in a hollow section (1) are parallel-connected electrically and linked via common signal lines (5, 8) with a connecting unit (11) containing a charge amplifier.

12. Force sensor arrangement according to one of Claims 1 to 10, whereby the piezo-elements (4) of a hollow section (1) are arranged in groups and the measuring signals of the individual groups are led off isolated electrically; the individual groups may be equipped with or without preamplifiers (18).

13. Force sensor arrangement according to one of Claims 1 to 10, whereby the measuring signals of each individual piezo-element (4) are led off and processed separately, and the individual piezo-elements (4) may be equipped with or without preamplifiers (18).

14. Assembly procedure for a force sensor arrangement according to one of Claims 1 to 13, whereby an elastic chain is formed from a foil (5), the piezo-elements (4) mounted on it, and the signal lines (8), this chain being drawn into the hollow section (1) which has previously been opened by compression at right angle to its length, after which the lateral compression of the hollow section (1) is released so that all piezo-elements (4) over the entire length of the hollow section are preloaded elastically and all air gaps are taken up, assuring perfect linearity and sensitivity of the piezo-elements (4).

## Revendications

1. Aménagement de capteurs de force destiné en particulier à la détermination dynamique de la charge par essieu, de la vitesse, de l'entre-axes et/ou du poids total de véhicules comprenant un certain nombre d'éléments piéziques (4) disposés en rangée et reliés à un système électronique (19) de traitement du signal, les éléments piéziques (4) étant disposés longitudinalement dans un profilé creux (1) et solidaires quant à la transmission des efforts sous une précontrainte permanente, élevée et élastique, qu'une sensibilité à la mesure de force à peu près constante soit assurée sur toute la longueur du profilé creux (1), les éléments piéziques (4) soient reliés par une ligne de transmission du signal intégrée électriquement conductible (5) et d'autres lignes de transmission de signaux (6, 7, 8) au système de traitement du signal (19) de telle manière que leur branchement soit possible individuellement, par groupes ou en parallèle et l'aménagement de capteurs étant constitué d'au moins une unité de connexion (11), d'au moins une unité capteur (12) et d'au moins une unité terminale (13).

2. Aménagement de capteurs de force selon revendication de brevet 1, I'unité de connexion (11) comprenant des amplificateurs p.ex. des amplificateurs de charge ou des convertisseurs d'impédance.

3. Aménagement de capteurs de force selon l'une des revendications de brevet 1 ou 2, I'unité terminale (13) étant intégrée dans l'unité capteur (12) c.à.d. faisant partie intégrante de l'unité capteur (2).

4. Aménagement de capteurs de force selon l'une des revendications de brevet 1 à 3, le profilé creux (1) étant un tube de section circulaire dans lequel sont intégrés des rondelles piéziques (3) montées entre des pièces d'introduction des efforts (7).

5. Aménagement de capteurs de force selon l'une des revendications de brevet 1 à 3, le profilé creux (1) étant un tube ayant une autre section géométrique p.ex. un tube hexagonal dans lequel sont installés des rondelles piéziques (3) disposées entre des pièces d'introduction des efforts (7), les profilés creux (1) pouvant être en métal ou en matériau plastique.

6. Aménagement de capteurs de force selon l'une des revendications de brevet 1 à 5, le profilé creux (1) étant déformable normalement à son axe longitudinal, selon l'axe des x par compression mécanique provoquant ainsi un élargissement (Δh) élastique correspondant, normal à la compression en direction des z permettant ainsi l'installation des éléments piéziques (4).

7. Aménagement de capteurs de force selon l'une des revendications de brevet 1 à 6, les pièces d'introduction des efforts (7) étant isolées électriquement du profilé creux (1).

8. Aménagement de capteurs de force selon l'une des revendications de brevet 1 à 7, le profilé creux (1) comportant plusieurs unités de capteurs (12) de longueur uniforme (l1) constituées en modules auxquelles sont reliées d'une part une unité de connexion (11) connectée directement ou par un câble à gaine ondulée aux unités de capteurs (12) et d'autre part, au moins une unité terminale (13), les différents unités (11, 12, 13) étant reliées entre elles au moyen de liaisons enfichables (14), de brides à souder (15) ou de douilles à coller, ces brides et douilles (15) pouvant être indifféremment en métal ou en plastique et être remplies après installation avec une masse plastique.

9. Aménagement de capteurs de force selon revendications (8), celle-ci étant complètement cablée en éléments repliables de longueur (l1) correspondant à une unité de capteurs et dûment emballé comme un système replié en brins qui pourra être déplié sur le chantier de la route, assemblé et installé, les éléments de connexion (14) resp. les brides (15) présentant une certaine élasticité permettant une adaptation de l'aménagement de capteurs à la courbure de la chaussée.

10. Aménagement de capteurs de force selon l'une des revendications de brevet 1 à 9, les éléments piéziques (4) étant reliés à des pré-amplificateurs (18).

11. Aménagement de capteurs de force selon l'une des revendications de brevet 1 à 10, les éléments piéziques (4) disposés dans un profilé creux (1) étant branchés électriquement en parallèle et reliés à une unité de connexion (11) comportant un amplificateur de charge par l'intermédiaire de lignes de transmission communes (5, 8).

12. Aménagement de capteurs de force selon l'une des revendications de brevet 1 à 10, les éléments piéziques (4) d'un profilé creux (1) étant rassemblés par groupe et les signaux de mesure de différents groupes étant amenés et traités électriquement séparément les uns des autres, les divers groupes d'éléments pouvant être équipés ou non de pré-amplificateurs (18).

13. Aménagement de capteurs de force selon l'une des revendications de brevet 1 à 10, les signaux de mesure de chaque élément piéziques (4) étant transmis et traités séparément, les éléments piéziques (4) pouvant être équipés ou non de pré-amplificateurs.

14. Procédé de montage pour un aménagement de capteurs de force selon l'une des revendications de brevet 1 à 13, en ce sens que d'une membrane (15) sur laquelle sont installés les éléments piéziques (4) et les lignes de transmission du signal est constitué une chaîne élastique qui est enfilée dans un profilé creux (1) qui aura été comprimé pour le deformer et en permettre l'introduction, est relachée de sorte qu'en reprenant sa forme d'origine tous les éléments piéziques soient précontraints élastiquement sur toute la longueur du profilé creux (1) supprimant ainsi tous les entrefers et garantissant une linéarité et une sensibilité parfaites des éléments piéziques (4).
